# FASCICULE DE BREVET EUROPEEN

(11) **EP 1 491 431 B1**
(45) Date de publication et mention de la délivrance du brevet: **21.11.2007**
(21) Numéro de dépôt: 03360073.5
(22) Date de dépôt: 23.06.2003
(51) Int. Cl.: B62D 33/06, B62D 1/18, B60N 2/30

(54) **Structure de cabine de véhicule de voirie à siège conducteur modulable**
Fahrzeugkabine mit variabelem Fahrersitz
Vehicle cab with variable driver's seat

(43) Date de publication de la demande: 29.12.2004
(73) Titulaire: Jungo Voirie SAS, 68520 Burnhaupt-le-Haut (FR)
(72) Inventeur: Jungo, Nicolas, 6370 Stans (CH)
(74) Mandataire: Burkard, Thierry

(56) Documents cités:
- EP-A- 0 050 929
- EP-A- 0 960 850
- WO-A-99/48745
- FR-A- 2 771 997
- US-A- 5 911 471

## Description

La présente invention concerne une structure de cabine pour véhicule de voirie comportant plus particulièrement des moyens permettant d'ajuster la position du siège du conducteur et les commandes selon la configuration du véhicule, et notamment la présence éventuel d'un passager aux cotés du conducteur.

Les véhicules utilitaires affectés à des travaux de voirie tels que le nettoyage des chaussées, le déneigement ou l'entretien des voies ou espaces ouverts au public présentent en général un faible encombrement et se caractérisent par une largeur bien moindre par rapport aux véhicules de type classique utilisés pour le transport de personnes ou de marchandises.

En effet, du fait même de leur fonction qui impose des déplacements à faible vitesse et sur des voies parfois étroites, ces véhicules doivent présenter une structure légère et un faible encombrement.

Les véhicules couramment utilisés pour des tâches de voirie présentent une largeur hors tout comprise entre 1 m et 1 m 30.

Le véhicule comporte en règle générale une cabine avant adossée à un bac de travail pouvant consister en une cuve d'alimentation en eau pour les véhicules affectés à des tâches de lavage ou un réceptacle pour recueillir des déchets, s'agissant des véhicules affectés à des tâches de nettoyage ou de collecte. L'ensemble est positionne sur un châssis qui peut être articulé.

Dans la mesure où ces véhicules comportent souvent dans leurs parties avant et inférieure des éléments fonctionnels, comme par exemple des brosses ou des rampes de lavage dépassant sur les cotés, il est impératif que l'opérateur qui est le plus souvent est en même temps le conducteur du véhicule dispose d'une visibilité la plus large possible.

Pour ces raisons, outre des vitrages de grandes dimensions, on positionne habituellement le siège du conducteur sur le milieu de la cabine, ce qui lui permettra, tout en consacrant toute l'attention nécessaire aux tâches de conduite, d'avoir une visibilité satisfaisante pour le travail effectif à réaliser, tant sur la droite que sur la gauche du véhicule.

Cette position idéale par rapport à la visibilité représente cependant une contrainte lorsque deux personnes doivent prendre place en même temps dans le véhicule, ce qui impose de prévoir deux sièges dans la cabine.

Cette situation peut se rencontrer par exemple, lorsqu'il est nécessaire d'adjoindre au conducteur une personne qui interviendra, soit sur l'emplacement de travail envisagé, soit en accompagnement tout au long du déplacement du véhicule, par exemple pour assurer des tâches de manipulation d'accessoires tels des jets, des brosses ou des chasse-neige.

Compte tenu de la faible largeur du véhicule, il sera alors nécessaire si l'on veut avoir un second siège à l'intérieur de la cabine de décaler le siège du conducteur vers la droite, ce qui par voie de conséquence diminuera grandement la visibilité sur la gauche, avec les risques que cela peut représenter tant pour un éventuel opérateur accompagnant à pied, que pour les véhicules ou obstacles éventuellement présents sur la partie gauche de la chaussée.

Par ailleurs, du fait de l'étroitesse à l'intérieur de la cabine, le chauffeur ne sera pas placé dans une position de conduite particulièrement agréable, avec là également les risques que cela peut représenter en termes de sécurité, si une position inadéquate est imposée tout au long d'une journée de travail.

Plusieurs solutions ont été proposées pour remédier à ces inconvénients.

Une première solution consiste à prévoir des moyens permettant de déplacer le siège du conducteur pour dégager un espace en fonction des besoins.

Ceci suppose la présence de moyens de fixation montés à demeure sur le plancher de la cabine, avec des moyens correspondants sous le siège ou les sièges utilisés pour autoriser leur montage ou leur démontage en fonction des besoins.

De telles modalités sont décrites dans le document JP 2000 158 984.

Cependant, cette solution n'est pas pleinement transposable au cas des véhicules de voirie, car elle est plutôt conçue pour permettre de remplacer le siège conducteur par un fauteuil roulant dans le cas d'un conducteur à mobilité réduite.

Il paraît difficile de transposer cette solution au cas des véhicules de voirie en raison du très faible espace disponible à l'intérieur de la cabine.

D'autres solutions consistent à prévoir un décalage corrélatif des moyens de direction, et notamment de la colonne et du volant qui lui est associé, pour passer d'une position d'utilisation sur la gauche de la cabine s'agissant de véhicules utilisés dans les pays où la conduite se fait à droite, vers une position centrale.

On connaît ainsi des dispositifs qui permettent de déplacer le volant de la gauche vers la droite et inversement et ainsi d'ajuster la position des organes de commande en fonction de celle de l'utilisateur.

Un dispositif de ce type est par exemple décrit dans le document US 530 6032.

Autres exemples de la technique antérieure sont:
US5911471, divulguant une cabine comportant un siège conducteur et un siège additionel.
EP0050929, divulguant une colonne de direction montée sur un paralléllogramme.
FR2771997, divulguant une colonne de direction de bateau deplacable avec blocage par une goupille dans deux trous.

Cependant, ces dispositifs prévoient des liaisons par courroies crantées, ce qui est particulièrement dangereux. En effet, en cas de rupture de la courroie, le véhicule devient totalement incontrôlable.

Pour palier à cet inconvénient, on connaît également des dispositifs qui permettent un déplacement de la colonne de conduite, mais avec déconnexion à un moment donné de la chaîne cinématique lors du déplacement.

Ceci présente une difficulté en raison des risques d'erreurs lors de la reconnection.

La présente invention se propose de remédier aux inconvénients mentionnés ci-dessus en proposant une structure de cabine pour véhicule de voirie caractérisée en ce qu'elle comporte d'une part des sièges modulables qui permettent le déplacement du siège chauffeur du milieu vers la droite et inversement, avec présence optionnelle d'un siège passager rabattable pour permettre le positionnement du siège chauffeur sur le milieu de la cabine, et d'autre part un volant qui pourra pivoter d'une position de conduite à gauche vers une position de conduite centrale sans interruption de la chaîne cinématique.

On pourra rapidement passer d'une configuration à un siège à une configuration à deux sièges et inversement, sans obérer les paramètres de sécurité et de visibilité pour le conducteur.

Selon l'invention, la structure comporte un volant à liaison mécanique pouvant pivoter simplement en raison d'un faible décalage.

Le véhicule étant étroit, le pédalier restera en place, c'est à dire sur la droite.

L'invention sera mieux comprise au travers de la description ci-après d'un mode non limitatif de mise en oeuvre et en référence aux figures annexées dans lesquelles :
- la figure 1 est une vue du devant de la cabine selon l'invention, en position biplace,
- la figure 2 est une vue latérale de la cabine représentée à la figure 1,
- la figure 3 est une vue du devant de la cabine selon l'invention, en position monoplace centrale,
- la figure 4 est une vue latérale de la cabine représentée à la figure 3,
- la figure 5 est une vue frontale en coupe de la colonne de direction en position de réglage,
- la figure 6 est une vue latérale du volant et de la colonne de direction,
- la figure 7 est une vue avant des sièges de la cabine en version biplace,
- la figure 8 et la figure 9 montrent les modalités de repliage du siège additionnel, et
- la figure 10 représente les sièges en version monoplace, le siège additionnel étant replié.

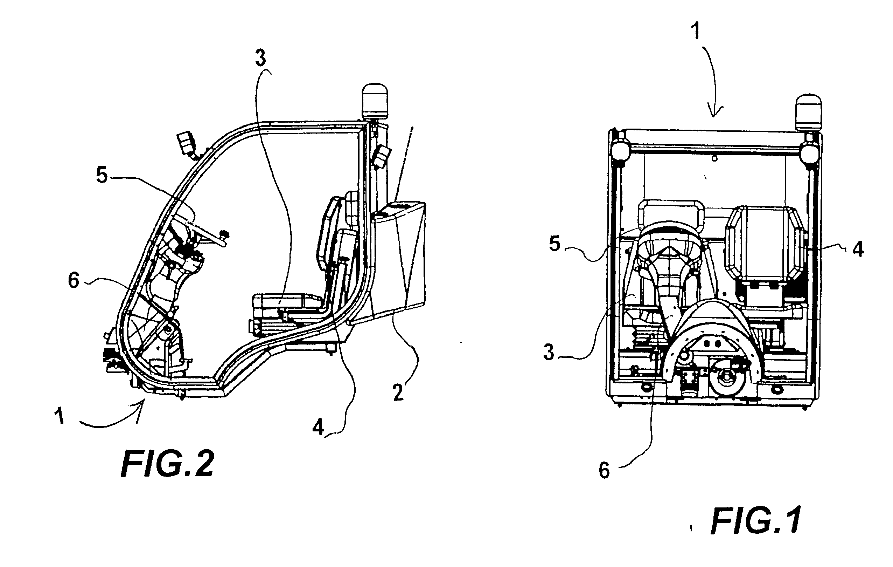

En référence aux dessins annexés, et plus particulièrement aux figures 1 et 2, un véhicule de voirie comporte une cabine (1) monobloc montée sur un châssis (non représenté) et adossée à un bac de travail (non représenté), qui peut par exemple consister en une cuve.

A l'intérieur de la cabine (1) sont disposés un siège conducteur (3) et un siège additionnel (4), ainsi qu'un volant (5) relié mécaniquement à une colonne de direction (6). La cabine (1) comporte d'autres éléments classiques qui ne font pas l'objet d'une description détaillée dans la mesure où ils ne concernent pas l'objet de la présente invention. Les sièges (3) et (4) sont montés par la base sur des rails coulissants.

Les figures 1 et 2 représentent une cabine de véhicule de voirie dans laquelle les sièges et les éléments de direction sont positionnés pour une utilisation en version biplace.

Le siège conducteur (3) est placé sur la droite par rapport à la direction du déplacement, dans la mesure où ceci offre la meilleure visibilité par rapport aux obstacles potentiels, notamment les véhicules en stationnement. De ce fait, la colonne (6) et le volant (5) sont décalés en correspondance.

Un passager ou un second opérateur peut prendre place sur le siège additionnel (4).

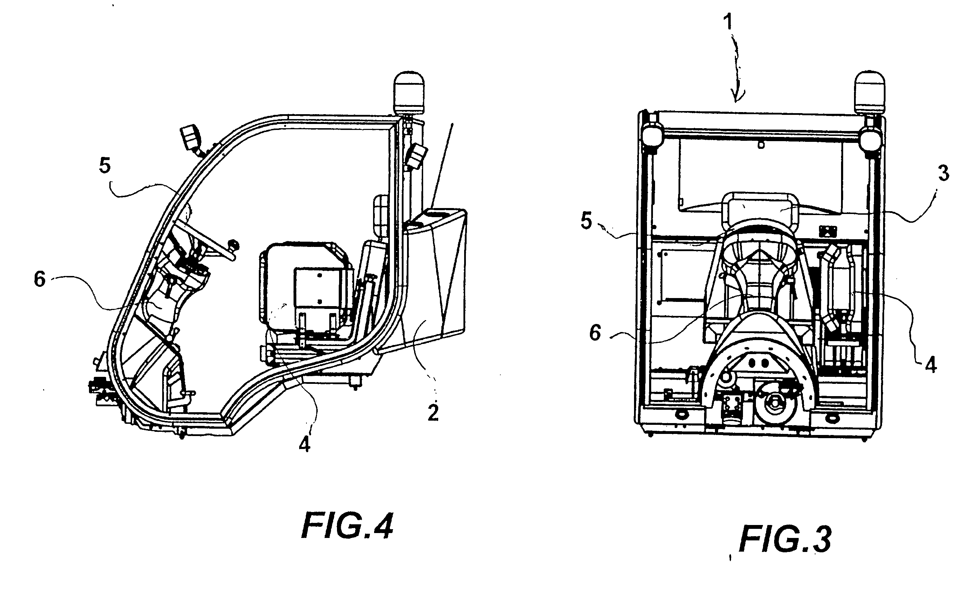

Les figures 3 et 4 représentent la cabine d'un véhicule de voirie selon les figures 1 et 2, après déplacement des divers éléments pour obtenir une version monoplace.

Pour passer en version monoplace, il est nécessaire de dégager de l'espace dans la partie centrale de la cabine (1) pour permettre un décalage en position centrale du siège conducteur (3). Ceci impose un déplacement à la fois du siège additionnel (4) pour libérer l'espace nécessaire, et de la colonne de direction (6), afin que le volant (5) se trouve dans le même plan que le siège conducteur (3).

Le siège conducteur (3) est alors en position centrale et le siège additionnel (4) est replié dans la partie gauche de la cabine (1).

La colonne (6) et le volant (5) sont alignés selon l'axe du siège (3).

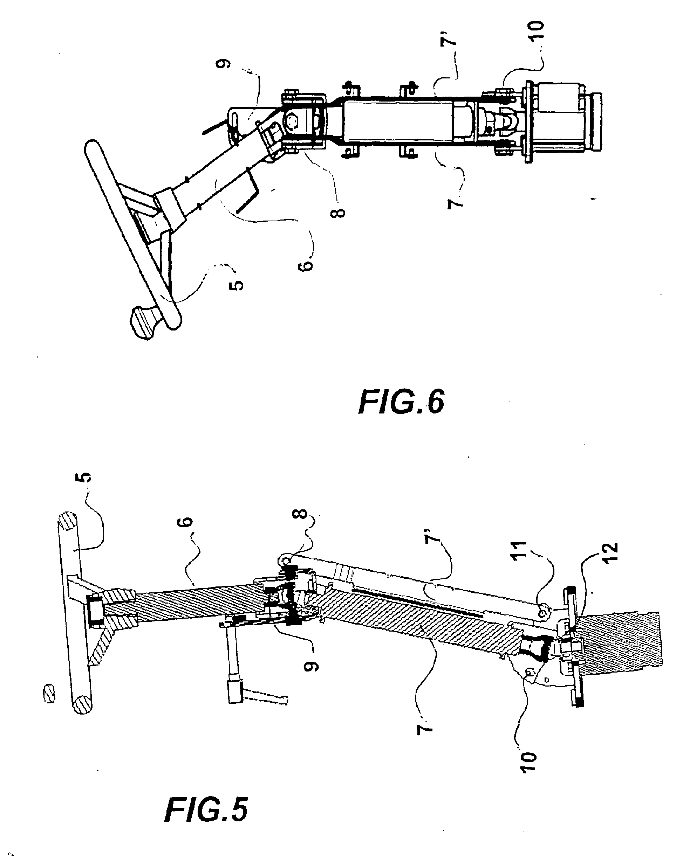

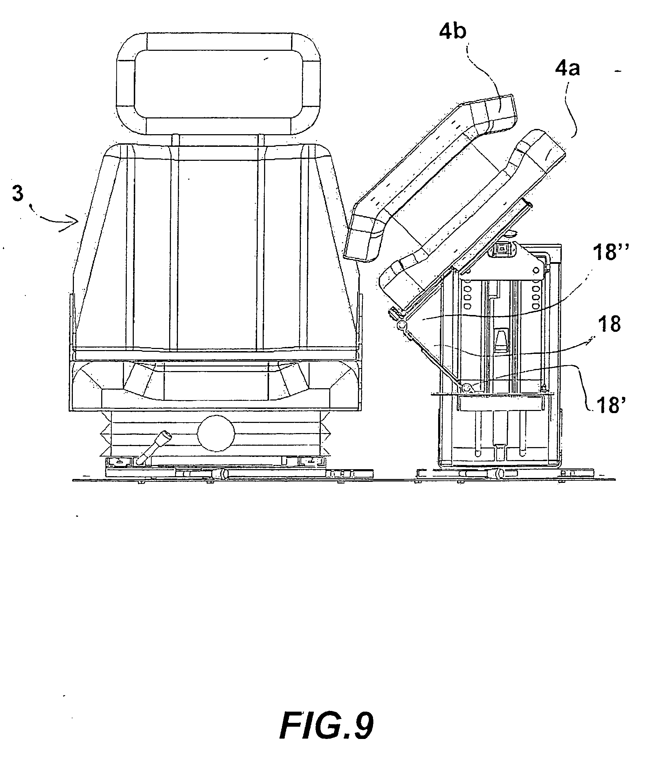

Les modalités permettant au conducteur de passer presque instantanément d'une position biplace à une position monoplace ou inversement sont illustrées aux figures 6 à 10.

Plus particulièrement, les figures 5 et 6 montrent les moyens permettant de déplacer l'ensemble formé par la colonne de direction (6) et le volant (5).

La colonne (6) est montée sur un parallélogramme (7) formé de deux bras (7', 7") et fixé sur la structure de la cabine. Un réglage de confort de l'inclinaison du volant (5) peut être réalisé par pivotement de la base de la colonne (6) autour d'un axe (8) traversant une tôle de blocage (9), par simple action sur une butée (non représentée).

Selon une forme possible de réalisation, le parallélogramme (7) est relié par la base au système de direction du véhicule (non représenté) situé sous le châssis du véhicule. Il est bloqué en position par une tirette (10) à ressort prévue pour contrôler la rotation des extrémités inférieures des bras (7') et (7") autour de leurs axes respectifs (11) et (12).

La transmission est assurée grâce à deux cardans (2, 2'), interposés respectivement entre la base de la colonne (6) et l'extrémité supérieure du parallélogramme (7), et entre l'extrémité inférieure du parallélogramme (7) et la structure de la cabine (1).

En partant d'une position biplace comme décrite précédemment, et pour passer en position monoplace, le conducteur actionnera la tirette (10) pour libérer la base du parallélogramme (7) qui pourra pivoter dans le plan horizontal, autour des axes (11, 12).

Un fois atteinte la position adéquate, comme représenté à la figure 6, le conducteur relâche la tirette (10) qui reprend sa place en butée pour bloquer le parallélogramme (7) en position.

Puis il restera à ajuster la position des sièges.

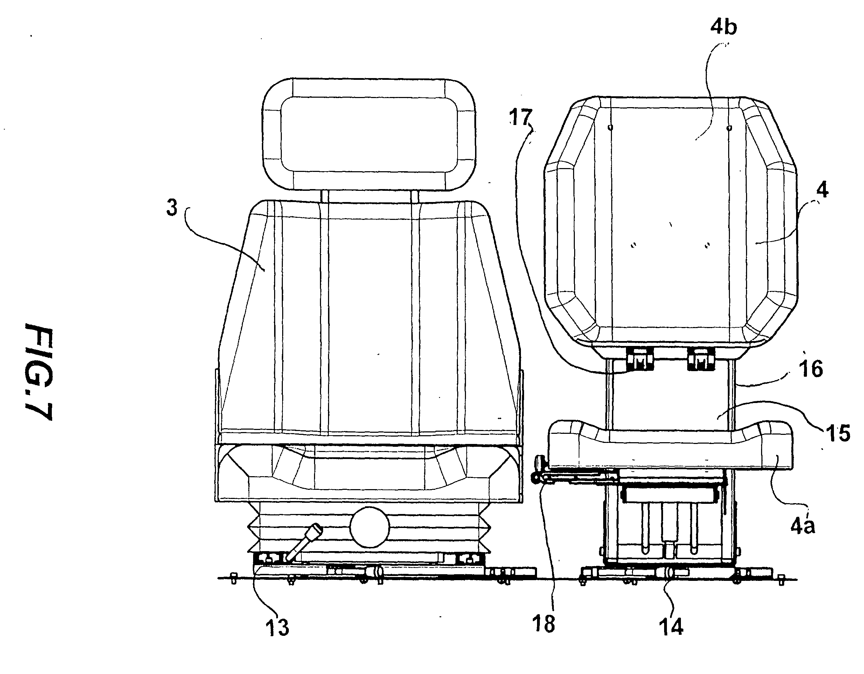

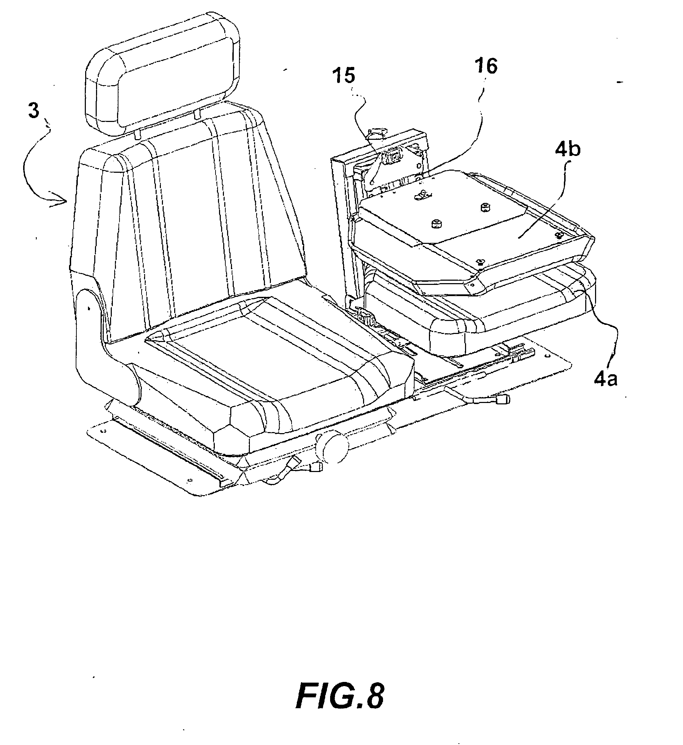

Comme illustré dans les figures 7 et 8, l'assise (4a) et le dossier (4b) du siège additionnel (4) sont fixés sur une tôle en L (15), formant support et monté par la base sur les rails coulissants (13, 14) transversaux.

Le dossier (4b) est relié à la partie verticale de la tôle (15) par une charnière (16) et comporte des moyens de verrouillage (17) lorsqu'il est en position dépliée.

Une charnière double (18) relie la partie horizontale de la tôle (15) et la paroi latérale intérieure de l'assise (4a).

Pour passer d'une version biplace à la version monoplace, il suffira de décaler le siège additionnel (4) vers la gauche de la cabine.

Ensuite, on replie le dossier (4b) contre l'assise (4a) autour de la charnière (16) après avoir desserré les moyens de verrouillage (17).

Puis, on relève l'ensemble dossier/assise (4a, 4b) en le faisant pivoter autour de l'axe (18') de la charnière (18) jusqu'à ce qu'il vienne en butée à la verticale et on le replie ensuite suivant l'axe (18") de la charnière (18) pour le positionner dans le plan vertical.

Enfin, on coulisse le siège (4) ainsi replié jusqu'à sa position de blocage. Un plot de centrage (non représenté) permettra de positionner correctement le siège replié.

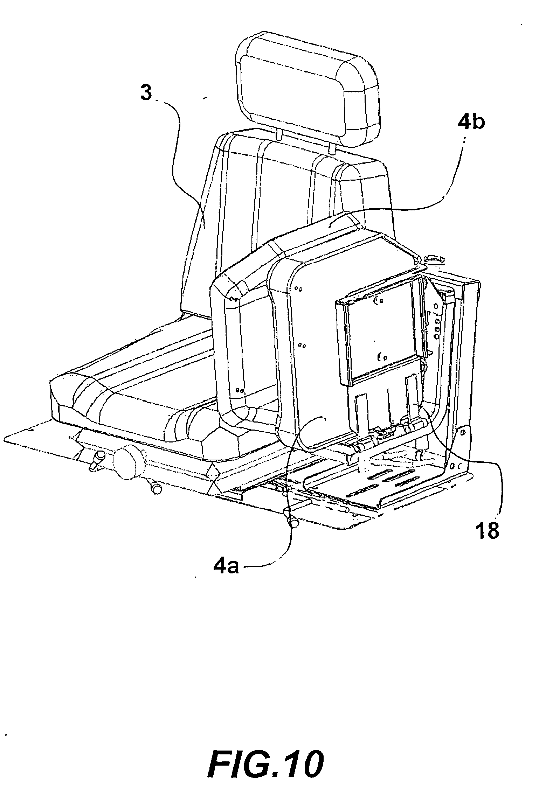

Il ne restera plus alors qu'à coulisser le siège conducteur (3) en position centrale, comme illustré à la figure 10.

La description qui précède permet d'apprécier les avantages d'un véhicule de voirie équipé d'une structure de cabine selon la présente invention.

Le volant peut être basculé d'une position biplace classique vers une position centrale sans aucune interruption de la chaîne cinématique, donc sans aucun risque d'endommagement du système de direction ni de perte de contrôle du véhicule.

Les sièges peuvent être déplacés et le siège passager peut être replié d'une manière à la fois simple et rapide, sans qu'il soit nécessaire d'effectuer des opérations complexes de démontage, remontage ou réglage, et sans immobilisation du véhicule.

L'invention n'est pas limitée au mode de mise en ouvre décrit ci-dessus à titre d'exemple. En particulier, la transmission par cardan aux deux extrémités du parallélogramme supportant la colonne de direction peut être remplacée par tout moyen équivalent. De même, l'exemple de réalisation décrit et représenté dans les figures annexées illustre une liaison par la base du support de colonne au système de direction du véhicule. On pourra parfaitement prévoir, sans pour cela sortir du cadre de la présente invention, d'autres modalités de liaison, par exemple une liaison par flexibles avec raccordement direct à la partie supérieure du support.

## Revendications

1. Structure de cabine de véhicule de voirie à siège conducteur modulable, permettant le déplacement du siège chauffeur du milieu vers la droite et inversement, composée d'une cabine (1) monobloc montée sur un châssis et adossée à un bac de travail, ladite cabine comportant à l'intérieur un siège conducteur (3) et un siège additionnel (4), ainsi qu'un volant (5) relié mécaniquement à une colonne de direction (6) montée sur un parallélogramme (7) formé de deux bras (7', 7") d'axes respectifs (11, 12) et fixé sur la structure de la cabine (1), le parallélogramme (7) étant relié par la base au système de direction du véhicule, **caractérisé en ce que** la rotation des extrémités inférieures des bras (7') et (7") autour des axes (11, 12) est contrôlée au moyen d'une tirette (10) à ressort.

2. Structure de cabine de véhicule de voirie suivant la revendication 1, **caractérisée en ce que** le siège conducteur (3) et le siège additionnel (4) sont montés par la base sur des rails coulissants (13, 14).

3. Structure de cabine de véhicule de voirie suivant la revendication 2, **caractérisée en ce que** les rails coulissants (13, 14) sont disposés transversalement.

4. Structure de cabine de véhicule de voirie suivant l'une des revendications précédentes, **caractérisée en ce que** le siège additionnel (4) comporte une assise (4a) et un dossier (4b) fixés sur une tôle en L (15), le dossier (4b) étant relié à la partie verticale de la tôle (15) par une charnière (16).

5. Structure de cabine de véhicule de voirie suivant la revendication 4, **caractérisée en ce que** la partie horizontale de la tôle (15) et la paroi latérale intérieure de l'assise (4a) sont reliées par une charnière double (18).

## Claims

1. Road cleaning vehicle cab with variable driver's seat making it possible to shift the driver's seat to the right and back, comprised of a cab (1) made in one piece on a chassis leaning against a work tank, said cab comprising on the inside a driver's seat (3) and an additional seat (4) as well as a steering wheel (5) connected mechanically to the steering column (6) fitted on a parallelogram (7) formed by two arms (7', 7") with their respective axes (11, 12) and fixed on to the cab structure (1), the parallelogram (7) being connected via the base to the vehicle's steering system, **characterised in that** the rotation of the lower ends of the arms (7') and (7") around the axes (11, 12) is controlled by means of a pull tab (10) with a spring.

2. Road cleaning vehicle cab structure according to claim 1, **characterized in that** the driver's seat (3) and the additional seat (4) are fitted at the base on sliding rails (13, 14).

3. Road cleaning vehicle cab structure according to claim 2, **characterized in that** the sliding rails (13, 14) are arranged crosswise.

4. Road cleaning vehicle cab structure according to one of the previous claims, **characterized in that** the additional seat (4) comprises a seating base (4a) and a back (4b) fixed on an L-shaped sheet metal section (15), the seat back being connected to the vertical part of the sheet metal section (15) by a hinge (16).

5. Road cleaning vehicle cab structure according to claim 4, **characterized in that** the horizontal part of the sheet metal section (15) and the interior lateral wall of the seating base (4a) are connected by a double hinge (18).

## Patentansprüche

1. Kabinenstruktur eines Arbeitsfahrzeugs mit variablem Fahrersitz, die die Verschiebung des Fahrersitzes von der Mitte nach rechts und umgekehrt ermöglicht, bestehend aus einer auf einem Fahrzeugrahmen montierten Monoblockkabine (1), die an einem Arbeitsbehälter anliegt, wobei die besagte Kabine im Inneren einen Fahrersitz (3) und einen zusätzlichen Sitz (4) aufweist, sowie ein Lenkrad (5), das mechanisch mit einer Lenksäule (6) verbunden ist, die auf einem Parallelogramm (7) montiert ist, das aus zwei Armen (7', 7") der jeweiligen Achsen (11, 12) besteht, und auf der Kabinenstruktur (1) befestigt ist, wobei das Parallelogramm (7) durch seine Basis mit dem Lenksystem des Fahrzeugs verbunden ist, **dadurch gekennzeichnet, dass** die Drehung der unteren Enden der Arme (7') und (7") um die Achsen (11, 12) durch einen Federwinkelhebel (10) gesteuert wird.

2. Kabinenstruktur eines Arbeitsfahrzeugs nach Anspruch 1, **dadurch gekennzeichnet, dass** der Fahrersitz (3) und der Zusatzsitz (4) mit ihrer Basis auf Schiebeschienen (13, 14) montiert sind.

3. Kabinenstruktur eines Arbeitsfahrzeugs nach Anspruch 2, **dadurch gekennzeichnet, dass** die Schiebeschienen (13, 14) quer angeordnet sind.

4. Kabinenstruktur eines Arbeitsfahrzeugs nach einem der vorausgehenden Ansprüche, **dadurch gekennzeichnet, dass** der Zusatzsitz (4) eine Sitzfläche (4a) und eine Rückenlehne (4b) umfasst, die auf einem L-förmigen Blech (15) befestigt sind, wobei die Rückenlehne (4b) über ein Scharnier (16) mit dem senkrechten Teil des Blechs (15) verbunden ist.

5. Kabinenstruktur eines Arbeitsfahrzeugs nach Anspruch 4, **dadurch gekennzeichnet, dass** der horizontale Teil des Blechs (15) und die innere Seitenwand des Sitzes (4a) durch ein doppeltes Scharnier (18) miteinander verbunden sind.
